# EUROPÄISCHE PATENTANMELDUNG

(11) **EP 4 573 961 A1**
(43) Veröffentlichungstag der Anmeldung: **25.06.2025**
(21) Anmeldenummer: 24219890.1
(22) Anmeldetag: 13.12.2024
(51) Int. Cl.: A44B 18/00, B29C 41/26

(54) **VERFAHREN UND VORRICHTUNG ZUM HERSTELLEN EINES HAFTVERSCHLUSSTEILS UND HAFTVERSCHLUSSTEIL**

(30) Priorität: 22.12.2023 DE 102023213266; 17.06.2024 DE 102024205551
(71) Anmelder: Gottlieb Binder GmbH & Co. KG, 71088 Holzgerlingen (DE)
(72) Erfinder: HEEPE, Lars, 72072 Tübingen (DE); DROTLEF, Dirk-Michael, 75233 Tiefenbronn (DE); TRAMSEN, Halvor, 71088 Holzgerlingen (DE)
(74) Vertreter: Kohler Schmid Möbus Patentanwälte

(57) **Zusammenfassung**

Die Erfindung betrifft ein Verfahren zum Herstellen eines Haftverschlussteils (12), das eine Vielzahl von Haftelementen (28) mit stirnseitigen Kontaktflächen (32) zur wiederlösbaren Anhaftung an weiteren Bauteilen mittels Adhäsionskraft aufweist, wobei die Haftelemente (28) in Formhohlräumen (18) eines Formsiebs (30) eines Formwerkzeugs (20) aus einem Beschichtungsmaterial (16) geformt werden. Bei dem Verfahren wird dem Beschichtungsmaterial (16) eine Trägerbahn (36) zugeführt und an einer dem Beschichtungsmaterial (16) zugewandten Seite (36a) der Trägerbahn (36) werden in den Formhohlräumen (18) des Formwerkzeugs (20) die Haftelemente (28) geformt, wobei die Trägerbahn (36) bevorzugt vor dem Formen der Haftelemente (28) mit dem Beschichtungsmaterial (16) verbunden wird. Die Erfindung betrifft auch eine Vorrichtung (10) zur Herstellung eines solchen Haftverschlussteils (12) sowie ein Haftverschlussteil (12).

## Beschreibung

### Hintergrund der Erfindung

Die Erfindung betrifft ein Verfahren zum Herstellen eines Haftverschlussteils, das eine Vielzahl von Haftelementen mit stirnseitigen Kontaktflächen zur wiederlösbaren Anhaftung an weiteren Bauteilen mittels Adhäsionskraft aufweist. Die Haftelemente werden in Formhohlräumen eines Formsiebs eines Formwerkzeugs aus einem Beschichtungsmaterial geformt. Die Erfindung betrifft ferner eine Vorrichtung zur Herstellung eines Haftverschlussteils, umfassend: ein Formwerkzeug mit einem Formsieb, in dem Formhohlräume gebildet sind, sowie eine Zuführungseinrichtung zur Zuführung eines Beschichtungsmaterials zu den Formhohlräumen des Formwerkzeugs, die zur Formung einer Vielzahl von Haftelementen mit stirnseitigen Kontaktflächen zur wiederlösbaren Anhaftung an weiteren Bauteilen mittels Adhäsionskraft ausgebildet sind. Die Erfindung betrifft auch ein Haftverschlussteil, umfassend: eine Vielzahl von Haftelementen aus einem Beschichtungsmaterial mit stirnseitigen Kontaktflächen zur wiederlösbaren Anhaftung an weiteren Bauteilen mittels Adhäsionskraft.

In der WO 2012/031658 A1 ist ein Haftverschlussteil mit einem Trägerteil und darauf aufstehend angeordneten Verschlussteilen beschrieben, die jeweils ein Kopfteil aufweisen, das an seiner freien Stirnseite zumindest eine Kontaktfläche zur wiederlösbaren Anhaftung an ein weiteres Bauteil mittels Adhäsionskraft aufweist. Bei der Herstellung des Haftverschlussteils werden die Verschlussteile in Formhohlräumen eines metallischen Formsiebs geformt, indem ein Beschichtungsmaterial bzw. Kunststoffmaterial in die Formhohlräume des Formsiebs gedrückt und auf einer Formwalze zugeordneten Seite des Trägerteils aus dem Beschichtungsmaterial die Verschlussteile ausgebildet werden.

Wie in der WO 2012/031658 A1 ebenfalls beschrieben ist, handelt es sich bei dem Adhäsionsmechanismus, der zur lösbaren Anhaftung an (mindestens) einem weiteren Bauteil dient, um die so genannte Van-der-Waals-Wechselwirkung, die in klassischer Weise als Untergruppe der Adhäsion angesehen wird. Die Adhäsion ermöglicht eine verlässliche Anhaftung der Haftelemente auch an Bauteilen mit glatten Oberflächen, beispielsweise an Fensterglas. Die Adhäsion wird u.a. dadurch ermöglicht, dass die Kontaktflächen einen vergleichsweise geringen Flächeninhalt von z.B. ca. 0,2 µm² bis ca. 0,5 µm² aufweisen.

In der EP1827795B1 ist ein Verfahren zum Herstellen einer Trägerbahn aus einer vorgebbaren Menge an Kunststoffmaterial mit einer Vielzahl an Formelementen beschrieben, die in Formhohlräumen eines Formwerkzeuges geformt werden und die als pilzförmige Verhakungsmittel ausgebildet sind. In einem Teil der Formhohlräume wird in Inneren des Formelements eine Kavität gebildet. Die jeweilige Kavität in dem Formelement kann zumindest nach einer Seite hin von einer Verschlussbahn verschließbar sein. Die Verhakungsmittel sollen mit anderen Verhakungsmitteln, beispielsweise mit Flausch- oder Hookmaterial, in Eingriff gebracht werden.

In der US 2024/0034912 A1 ist ein Mikrofaser-Array beschrieben, das eine Mehrzahl von Fasern mit aufgerauten Spitzen aufweist, die mit einer Oberfläche eines glatten, flachen Objekts in Kontakt gebracht wird. Das Mikrofaser-Array soll eine Reibung gegenüber einer Bewegung in horizontaler Richtung und eine kontrollierbare Adhäsion zum leichten Trennen von der Oberfläche des Objekts in vertikaler Richtung ermöglichen. Das Mikrofaser-Array wird unter Verwendung eines Formwerkzeugs aus einem aushärtbaren Polymer geformt. Mit Hilfe eines Vergussmaterials kann ein negativer Abguss des Mikrofaser-Arrays mit den aufgerauten Spitzen geformt werden und mittels des negativen Abgusses können weitere Mikrofaser-Arrays geformt werden.

In dem Artikel "Enhanced Flexible Mold Lifetime for Roll-to-Roll Scaled-Up Manufacturing of Adhesive Complex Microstructures", J.-K. Kim et al., Adv. Mater. 2023, 35, 2207257, wird ein Rolle-zu-Rolle Verfahren zur Herstellung von mikro-/nanostrukturierten Oberflächen, z.B. in Form von Gecko-inspirierten Mikrofaser-Haftmitteln, beschrieben. Es wird vorgeschlagen, die Lebensdauer eines beim Rolle-zu-Rolle Verfahren verwendeten flexiblen mikrostrukturierten Silikon-Formwerkzeugs zu erhöhen, indem ein zweistufiger Aushärtungsprozess mit UV-Licht durchgeführt wird.

In der EP3448671B1 ist ein Verfahren zum Zusammenbauen einer Anordnung beschrieben, die einen Streifen aus Halteelementen und ein Substrat umfasst. In einem Schritt des Bildens des Streifens wird der Streifen aus Halteelementen durch Verteilen eines Formmaterials in einer Formvorrichtung gebildet. Im Anschluss an den Schritt des Bildens des Streifens wird an einer den Halteelementen abgewandten Unterseite einer Basis des Streifens das Substrat aufgebracht, bevor die Unterseite der Basis des Streifens sich verfestigt.

### Aufgabe der Erfindung

Es ist Aufgabe der Erfindung, ein robust durchführbares Verfahren und eine entsprechende Vorrichtung anzugeben, bei denen bei der Herstellung des Haftverschlussteils Material eingespart werden kann. Es ist auch Aufgabe der Erfindung, ein entsprechendes Haftverschlussteil bereitzustellen.

### Beschreibung der Erfindung

Diese Aufgabe wird gemäß einem ersten Aspekt durch ein Verfahren der eingangs genannten Art gelöst, bei welchem dem Beschichtungsmaterial eine Trägerbahn zugeführt wird und an einer dem Beschichtungsmaterial zugewandten Seite der Trägerbahn in den Formhohlräumen des Formwerkzeugs die Haftelemente geformt werden, wobei die Trägerbahn bevorzugt vor dem Formen der Haftelemente mit dem Beschichtungsmaterial verbunden wird. In der vorliegenden Anmeldung werden die Begriffe Kunststoffmaterial und Beschichtungsmaterial sowie die Begriffe Kunststoffbahn und Beschichtungsbahn als Synonyme verwendet.

Bei dem erfindungsgemäßen Verfahren wird dem Beschichtungsmaterial eine Trägerbahn zugeführt, mit der das Beschichtungsmaterial beim Formen der Haftelemente verbunden ist. Dies erhöht die Robustheit des Herstellungsprozesses, da dieser für die Rheologie des Beschichtungsmaterials insensitiver wird. Auch kann durch die mit dem Beschichtungsmaterial verbundene Trägerbahn ein Reißen des Beschichtungsmaterials beim Herstellungsprozess, beispielsweise bei der Entformung von dem Formwerkzeug, verhindert werden bzw. das Beschichtungsmaterial kann dünner ausgebildet sein als dies bei einem Herstellungsprozess ohne die Verwendung der Trägerbahn der Fall wäre. Das Beschichtungsmaterial kann durch Kapillarkräfte in das Formgebungswerkzeug gezogen werden.

Es ist günstig, wenn die Verbindung zwischen der Trägerbahn und dem Beschichtungsmaterial vor dem Formen der Haftelemente erfolgt. Das Beschichtungsmaterial kann beispielsweise in der Art einer Beschichtung mit der Trägerbahn verbunden werden. Die Verbindung kann beispielweise dadurch erreicht werden, dass das (bandförmige) Beschichtungsmaterial und die Trägerbahn dem Formgebungswerkzeug gemeinsam zugeführt werden und bei bzw. vor der der Zuführung zu dem Formgebungswerkzeug aneinander anliegen. Es ist auch möglich, dass das Beschichtungsmaterial und die Trägerbahn bei der Zuführung aneinander angedrückt werden, um die Verbindung der Trägerbahn mit dem Beschichtungsmaterial zu erleichtern. Die Verbindung zwischen dem Beschichtungsmaterial und der Trägerbahn wird somit hergestellt, bevor die Trägerbahn und das Beschichtungsmaterial das Formgebungswerkzeug erreichen.

Bei einer Variante wird beim Formen der Haftelemente zwischen der Trägerbahn und den Haftelementen aus dem Beschichtungsmaterial eine Beschichtungsbahn gebildet, die eine Dicke von 2 mm oder weniger, bevorzugt von 300 µm oder weniger, besonders bevorzugt von 200 µm oder weniger, ganz besonders bevorzugt von 50 µm oder weniger, außerordentlich bevorzugt von 30 µm oder weniger, insbesondere von 10 µm oder weniger aufweist. Die Haftelemente werden bei dieser Variante an der der Trägerbahn abgewandten Seite der einteiligen Beschichtungsbahn geformt, indem das Beschichtungsmaterial in die Formhohlräume des Formwerkzeugs gedrückt wird bzw. in diese fließt. Die Dicke der Beschichtungsbahn kann aufgrund der Trägerbahn, mit der diese verbunden ist, deutlich geringer ausfallen als bei der Herstellung des Haftverschlussteils ohne die Verwendung der Trägerbahn. Auf diese Weise kann Beschichtungsmaterial bei der Herstellung des Haftverschlussteils sowie Energie beim Polymerisieren des Beschichtungsmaterials eingespart werden, d.h. es kann bei gleicher Funktionalität ein nachhaltigeres Haftverschlussteil hergestellt werden. Aufgrund der geringeren Dicke der Beschichtungsbahn wird die Flexibilität des Haftverschlussteils erhöht, was sich günstig auf die Adhäsionseigenschaften des Haftverschlussteils z.B. an Bauteilen mit gekrümmten Oberflächen auswirken kann.

Bei einer weiteren Variante wird nach dem Entformen der Haftelemente von den Formhohlräumen des Formwerkzeugs die Trägerbahn von der Beschichtungsbahn separiert. In diesem Fall handelt es sich bei der Trägerbahn um eine Opferbahn, die lediglich dazu verwendet wird, den Herstellungsprozess robuster zu machen, die aber am Haftverschlussteil selbst nicht mehr verwendet wird. Es ist auch möglich, dass die Trägerbahn eine Klebstoffschicht bzw. eine Klebstoff-Beschichtung an Ihrer dem Beschichtungsmaterial zugewandten Seite aufweist, die nach dem Separieren der Trägerbahn von der Beschichtungsbahn an der Beschichtungsbahn mit den Haftelementen verbleibt. In diesem Fall erfolgt das Separieren der Trägerbahn von der Beschichtungsbahn typischerweise bei einem Bediener unmittelbar vor dem Gebrauch des Haftverschlussteils, z.B. um dieses mit der Klebstoffschicht an einem starren Bauteil zu befestigen.

Alternativ kann die Trägerbahn sich dauerhaft bzw. unlösbar mit der Beschichtungsbahn verbinden und einen Teil des Haftverschlussteils bilden. Die dauerhafte Verbindung zwischen der Trägerbahn und der Beschichtungsbahn kann insbesondere ohne die Verwendung eines Fügemittels in Form eines Klebstoffs hergestellt werden. Ggf. kann für die Herstellung der dauerhaften Verbindung die Trägerbahn eine Haftvermittlerschicht aufweisen oder einer Oberflächenbehandlung unterzogen werden (s.u.).

Bei einer alternativen Variante werden die Haftelemente direkt an der dem Beschichtungsmaterial zugewandten Seite der Trägerbahn geformt. In diesem Fall ist keine durchgehende Beschichtungsbahn vorhanden, vielmehr werden die Haftelemente direkt - einzeln - an der Trägerbahn geformt. Auf diese Weise kann ein besonders dünnes und besonders flexibles Haftverschlussteil hergestellt werden.

Es ist möglich, dass die dem Beschichtungsmaterial zugewandte Seite der Trägerbahn zur Haftungsverbesserung beim Verbinden mit dem Beschichtungsmaterial oberflächenbehandelt oder mit einem Haftvermittler versehen ist. Abhängig von der Art des Beschichtungsmaterials, z.B. wenn es sich um ein Polysiloxan handelt, lässt sich dieses ggf. nur schwer mit anderen Materialien verbinden. Es kann daher günstig sein, die Trägerbahn für die Haftungsverbesserung einer Oberflächenbehandlung zu unterziehen, beispielsweise einer Plasmabehandlung oder einer Gasphasenfluorierung. Auch ein Haftvermittler bzw. ein Crafting, beispielsweise unter Verwendung von endgruppenfunktionalisierten Silanen, oder die Verwendung einer Haftvermittlerschicht ist möglich.

Bei einer weiteren Variante wird das Beschichtungsmaterial nach dem Formen der Haftelemente durch Wärme, z.B. durch Wärmestrahlung, durch Licht, bevorzugt durch UV-Licht, und/oder durch Luftfeuchte ausgehärtet. Bei dem Beschichtungsmaterial handelt es sich in der Regel um eine Abformmasse, insbesondere um eine vernetzbare Abformmasse. Abhängig von der Art des verwendeten Beschichtungsmaterials ist es erforderlich, dieses auszuhärten, indem eine Vernetzung von Molekülen bzw. Molekülketten erfolgt. Die Aushärtung kann beispielsweise dadurch erfolgen bzw. begünstigt werden, dass das Formwerkzeug, das beispielsweise als Formwalze ausgebildet ist, beheizt wird. Es ist aber auch möglich, das Aushärten durch Wärme, durch Licht, z.B. durch UV-Licht, und/oder durch die Luftfeuchte der Umgebungsluft zu bewirken, in der Regel nachdem das Haftverschlussteil von dem Formwerkzeug entformt wurde. Es ist auch möglich, dass das Beschichtungsmaterial für die Aushärtung geeignet präpariert ist, beispielsweise indem ein Katalysator, z.B. Platin, in dem Beschichtungsmaterial enthalten bzw. mit diesem gemischt ist. Dies ist z.B. bei einem Beschichtungsmaterial in Form von 2-Komponenten-Silikonkautschuk der Fall, der aufgrund des Katalysators vulkanisiert und hierbei aushärtet.

Bei einer weiteren Variante weist die Trägerbahn eine Dicke von 10 mm oder weniger, bevorzugt von 60 µm oder weniger, besonders bevorzugt von 40 µm oder weniger auf. Um bei der Herstellung Material einzusparen sowie um zu verhindern, dass das Haftverschlussteil eine zu große Steifigkeit aufweist, sollte die Trägerbahn typischerweise eine geringe Dicke aufweisen. Die Dicke der Trägerbahn sollte allerdings auch nicht zu klein gewählt werden und in der Regel bei ca. 25 µm oder darüber liegen. Eine vergleichsweise dünne Trägerbahn ist biegeschlaff und erleichtert die Formung der Haftelemente in den Formhohlräumen des Formwerkzeugs beispielsweise für den Fall, dass dieses ein bandförmiges Formsieb aufweist (s.u.).

Bei einer weiteren Variante ist die Trägerbahn als flexibles Bauteil, bevorzugt als Folie, insbesondere als informationstragende Folie, oder als starres Bauteil ausgebildet. Bei der Trägerbahn kann es sich um ein flexibles, biegeschlaffes und bevorzugt inelastisches Bauteil oder um ein starres Bauteil handeln. Bei der Trägerbahn kann es sich insbesondere um eine Folie handeln, die elastisch, plastisch oder inelastisch ausgebildet ist. Die Trägerbahn in Form der Folie kann beispielsweise aus Polyurethan (PUR), aus Polyethylenterephtalat (PET) oder aus Acrylatschaum hergestellt sein. Es kann sich insbesondere um eine informationstragende Folie handeln, wie sie in der DE102020004438A1 beschrieben ist, die durch Bezugnahme in ihrer Gesamtheit zum Inhalt dieser Anmeldung gemacht wird. Die informationstragende Folie kann beispielsweise farbig, mit einem Aufdruck bedruckt, z.B. mit Symbolen, vorzugsweise mit Text, bedruckt, z.B. zu Werbezwecken, reflektierend, fluoreszierend, leuchtend, matt oder glänzend, mit Sensoren versehen, z.B. als flexibles Display, oder mit KI versehen ausgebildet sein. Die Sensoren können in die Trägerbahn eingebettet sein, um diese vor der Umgebung zu schützen. Es kann sich auch um eine starre Trägerbahn bzw. um ein starres Bauteil handeln, an dem die Halteelemente geformt werden.

Die Trägerbahn kann auf ihrer dem Beschichtungsmaterial bzw. der Beschichtungsbahn abgewandten Seite glatt oder strukturiert sein. Beispielsweise kann die Trägerbahn Verschlusselemente aufweisen, die z.B. schlaufenförmig ausgebildet sein können und mit korrespondierenden Verschlusselementen, die z.B. hakenförmig ausgebildet sein können, mit einem weiteren Bauteil in der Art eines Klettverschlusses zusammenwirken. Auch kann die Trägerbahn z.B. zwei oder mehr Lagen aufweisen, zwischen denen ein flexibles Material eingebracht ist, z.B. in Form von Fasern oder dergleichen, um eine Anpassung an raue, gekrümmte oder wellige Oberflächen zu ermöglichen.

Bei einer weiteren Variante wird dem Beschichtungsmaterial eine Trägerbahn zugeführt, die an einer dem Beschichtungsmaterial abgewandten Seite eine Vielzahl von weiteren Haftelementen aus einem Beschichtungsmaterial mit stirnseitigen Kontaktflächen zur wiederlösbaren Anhaftung an weiteren Bauteilen mittels Adhäsionskraft aufweist. Die Vielzahl der weiteren Haftelemente an der dem Beschichtungsmaterial abgewandten Seite kann an der Trägerbahn auf dieselbe Weise gebildet worden sein wie die Haftelemente an der dem Beschichtungsmaterial zugewandten Seite der Trägerbahn gebildet werden. In diesem Fall durchläuft die Trägerbahn die Vorrichtung zur Herstellung des Haftverschlussteils zweimal, wobei die Seiten der Trägerbahn bei den beiden Durchläufen durch die Vorrichtung entgegengesetzt ausgerichtet sind.

Bei einer weiteren Variante ist die Trägerbahn ausgewählt aus der Gruppe umfassend: Textil, Vlies, Netz, Schaum, insbesondere Acrylatschaum. Das Material der Trägerbahn ist bevorzugt ausgewählt aus der Gruppe umfassend: Elastomere, thermoplastische Elastomere, Thermoplaste, Duroplaste, Klebstoffe. Die Trägerbahn kann auf verschiedene Weise ausgebildet sein. Die Trägerbahn kann auch aus nachhaltigen Rostoffen, beispielsweise aus Papier, in der Regel aus beschichtetem Papier, gebildet sein. Insbesondere kann die Trägerbahn, z.B. in Form einer Folie, aus einem thermpolastischen Kunststoff hergestellt sein. Dies ermöglicht eine Thermoformung der Trägerbahn bzw. des Haftverschlussteils, beispielsweise durch ein Tiefziehverfahren. Auf diese Weise können die Haftelemente sich in verschiedene Richtungen erstrecken und in verschiedenen Richtungen an einem oder mehreren Bauteilen haften. Das Material der Trägerbahn kann funktionalisiert sein. Beispielsweise kann das Material der Trägerbahn wärmeleitende Eigenschaften bzw. eine hohe Temperaturleitfähigkeit aufweisen. Für die Realisierung einer guten Wärmeleitfähigkeit kann die Trägerbahn beispielsweise als HDPE-Folie ausgebildet sein. Für den Fall, dass es sich bei der Trägerbahn um einen Schaum handelt, kann die Funktionalisierung z.B. in einem Anti-Flammschutzmaterial bestehen. Die Trägerbahn in Form eines Schaums oder eines Silikonmaterials kann eine erhebliche Dicke z.B. in der Größenordnung von mehreren Millimetern aufweisen, um eine Anpassung an unebene Oberflächen zu ermöglichen. Durch die Trägerbahn kann auch die Spannungsverteilung des Haftverschlussteils verbessert werden bzw. die Steifigkeit des Haftverschlussteils kann eingestellt werden. Beispielsweise kann abhängig vom gewählten Material der Trägerbahn das Haftverschlussteil nicht mehr dehnbar sein. Die Trägerbahn muss nicht zwingend vollflächig bzw. als durchgehende Trägerbahn ausgebildet sein, diese kann vielmehr Durchbrüche bzw. Löcher aufweisen und z.B. in der Art eines Netzes ausgebildet sein.

Bei einer weiteren Variante ist das Kunststoffmaterial bzw. Beschichtungsmaterial ausgewählt aus der Gruppe umfassend: Elastomere, bevorzugt Polyurethane, Polysiloxane, insbesondere Polyvinylsiloxane, thermoplastische Elastomere, Thermoplaste. Für die Herstellung des Haftverschlussteils kommen mehrere unterschiedliche Beschichtungsmaterialien in Frage. Insbesondere Polysiloxane haben sich für die Herstellung des Haftverschlussteils als günstig herausgestellt. Auch das Beschichtungsmaterial kann eine Funktionalisierung aufweisen. Beispielsweise können in das Beschichtungsmaterial, z.B. in Polysiloxan, Partikel eingebettet sein, beispielsweise Farbpartikel oder dergleichen.

Bei einer weiteren Variante wird das Beschichtungsmaterial durch Beschichten mit der Trägerbahn verbunden, wobei das Beschichtungsmaterial bevorzugt beim Beschichten und/oder nach dem Beschichten strukturiert wird. Wie weiter oben beschrieben wurde, kann die Verbindung zwischen dem Beschichtungsmaterial und der Trägerbahn in Form einer Beschichtung realisiert werden, um die Haftelemente an einer beliebigen Oberfläche zu formen. Die Beschichtung kann flächig auf die Trägerbahn aufgebracht werden, wozu beispielsweise ein Extruderkopf bzw. eine entsprechende Düse verwendet werden kann. Die Dicke des Beschichtungsmaterials, das durch Beschichten mit der Trägerbahn verbunden wird, liegt typischerweise in der Größenordnung zwischen ca. 50 µm und 100 µm, kann aber auch darüber oder darunter liegen. Die Dicke des Beschichtungsmaterials kann z.B. durch die Verwendung eines Rakels oder dergleichen vorgegeben bzw. ausgeglichen werden.

Es ist möglich, dass das Beschichtungsmaterial beim Beschichten und/oder nach dem Beschichten strukturiert wird. Die Strukturierung des Beschichtungsmaterials kann beispielsweise erfolgen, indem das Beschichten durch ein Druckverfahren, z.B. durch Siebdruck, Tiefdruck, etc. erfolgt, um Muster, Streifen etc. zu erzeugen. Zu diesem Zweck kann beispielsweise eine strukturierte Walze, eine Sprühdüse bzw. eine Druckerdüse verwendet werden. Es ist auch möglich, das Beschichtungsmaterial zu strukturieren, nachdem dieses in Form einer Beschichtung aufgebracht wurde, z.B. indem dieses an einem Rakel oder dergleichen vorbeigeführt wird, das strukturiert ist und in vorgegebenen Bereichen das Beschichtungsmaterial zurückhält, wodurch z.B. eine streifenförmige oder inselförmige Struktur erzeugt werden kann.

Bei einer weiteren Variante ist das Formsieb des Formwerkzeugs bandförmig und zum Formen der Haftelemente in den Formhohlräumen des bandförmigen Formsiebs wird die Trägerbahn mit der dem Beschichtungsmaterial zugewandten Seite mit dem bandförmigen Formsieb in Kontakt gebracht, bevorzugt an dem bandförmigen Formsieb entlanggeführt. Bei dieser Variante wird ein bandförmiges, in der Regel metallisches Formsieb verwendet, das typischerweise um zwei Rollen umläuft. Das Beschichtungsmaterial wird typischerweise im Bereich einer der beiden Rollen mit dem bandförmigen Formsieb in Kontakt gebracht, typischerweise auf das bandförmige Formsieb aufgelegt, wobei das Beschichtungsmaterial durch Kapillarkräfte in die Formhohlräume eindringt bzw. in die Formhohlräume fließt, in der Regel ohne dass zu diesem Zweck zusätzlich Druck auf das Beschichtungsmaterial bzw. auf die Trägerbahn aufgebracht werden muss. Es hat sich jedoch als günstig erwiesen, mit Hilfe einer Bürste, eines Besens oder dergleichen die Welligkeit der Trägerbahn auszugleichen bzw. diese zu glätten. Die Trägerbahn mit dem Beschichtungsmaterial wird dann an dem bandförmigen Formsieb, genauer gesagt an einem geradlinigen Abschnitt des bandförmigen Formsiebs, entlanggeführt. Nach dem Formen der Haftelemente durch das Eindringen des Beschichtungsmaterials in die Formhohlräume kann das Beschichtungsmaterial z.B. durch Wärmestrahlung oder durch UV-Licht ausgehärtet werden, während die Trägerbahn an dem bandförmigen Formsieb entlanggeführt wird.

Es hat sich herausgestellt, dass das Formen der Haftelemente mittels des bandförmigen Formsiebs einen besonders robusten Herstellungsprozess ermöglicht, bei dem die Parameterfenster deutlich größer sind, insbesondere ist der Herstellungsprozess weniger sensitiv gegenüber Materialveränderungen sowie gegenüber Veränderungen der Rheologie des Beschichtungsmaterials als das Formen der Haftelemente durch das Anpressen einer Druckrolle gegen eine Formrolle eines Formwerkzeugs. Sowohl die Geschwindigkeit beim Formen der Haftelemente als auch die Breite des Haftverschlussteils kann auf diese Weise deutlich gesteigert werden, da es auch bei einer größeren Breite nicht zu einem Einreißen beim Entformen kommt. Als Trägerbahn kann bei dieser Variante zudem ein starres Bauteil verwendet werden, das mit dem Beschichtungsmaterial beschichtet ist und das an dem bandförmigen Formsieb entlanggeführt wird, um die Haftelemente auszubilden. Bei der Herstellung unter Verwendung des bandförmigen Formsiebs wird das Beschichtungsmaterial nicht in die Formhohlräume eingepresst, sondern läuft in diese ein. Auf diese Weise kann der Herstellungsprozess mit einer Vorrichtung mit deutlich geringeren Genauigkeitsanforderungen durchgeführt werden.

Die Aufgabe wird gemäß einem weiteren Aspekt durch eine Vorrichtung der eingangs genannten Art gelöst, die eine weitere Zuführungseinrichtung zur Zuführung einer Trägerbahn zu dem Beschichtungsmaterial aufweist, wobei die Vorrichtung ausgebildet ist, an einer dem Beschichtungsmaterial zugewandten Seite der Trägerbahn in den Formhohlräumen des Formwerkzeugs die Haftelemente zu bilden. Bevorzugt ist die Vorrichtung ausgebildet, die Trägerbahn vor dem Formen der Haftelemente mit dem Beschichtungsmaterial zu verbinden, insbesondere bevor die Trägerbahn und das Beschichtungsmaterial das Formgebungswerkzeug erreichen. Das Beschichtungsmaterial und die Trägerbahn liegen in diesem Fall schon aneinander an bzw. sind miteinander verbunden, bevor sie das Formgebungswerkzeug erreichen.

Die weitere Zuführungseinrichtung kann als Abrolleinrichtung ausgebildet sein bzw. eine Abrolleinrichtung aufweisen, um die Trägerbahn von einer Walze bzw. einer Rolle abrollen bzw. abwickeln. Die Zuführungseinrichtung kann auch ausgebildet sein, die Trägerbahn über eine Walze oder über einen definierten Spalt dem Formgebungswerkzeug zuzuführen. Beispielsweise können das Beschichtungsmaterial und die Trägerbahn dem Formgebungswerkzeug über einen definierten Zuführungsspalt zugeführt werden, der zwischen zwei Walzen verläuft, wobei eine der beiden Walzen eine Druckwalze bildet, die mit dem Formgebungswerkzeug, z.B. in Form einer Formwalze, zusammenwirkt. Durch den Zuführungspalt bzw. durch die Vorgabe einer definierten Spaltbreite des Zuführungsspalts kann das Beschichtungsmaterial gegen die Trägerbahn angedrückt werden, was die Verbindung des Beschichtungsmaterials mit der Trägerbahn begünstigt.

Das Formgebungswerkzeug kann ausgebildet sein, zwischen der Trägerbahn und den Haftelementen aus dem Beschichtungsmaterial eine Beschichtungsbahn zu bilden, die eine Dicke von 2 mm oder weniger, bevorzugt von 300 µm oder weniger, besonders bevorzugt von 200 µm oder weniger, ganz besonders bevorzugt von 50 µm oder weniger, außerordentlich bevorzugt von 30 µm oder weniger, insbesondere von 10 µm oder weniger aufweist. Wie weiter oben beschrieben wurde, kann durch die Verwendung der Trägerbahn zur Herstellung des Haftverschlussteils eine Beschichtungsbahn mit einer geringeren Dicke ausgebildet werden als dies ohne die Trägerbahn der Fall wäre.

Bei einer Ausführungsform weist das Formwerkzeug eine Formwalze auf, die mit einem Druckwerkzeug in Form einer Druckwalze zusammenwirkt, wobei zwischen der Druckwalze und der Formwalze ein Förderspalt gebildet ist, und wobei die Vorrichtung ausgebildet ist, die Trägerbahn durch den Förderspalt zu führen. Durch die Vorgabe der Höhe des Förderspalts zwischen der Druckwalze und der Formwalze kann die Dicke der Beschichtungsbahn vorgegeben werden, an der die Haftelemente geformt werden.

Bei einer Weiterbildung dieser Ausführungsform weist der Förderspalt eine Höhe auf, welche die Dicke der Trägerbahn um 2 mm oder weniger, bevorzugt um 300 µm oder weniger, besonders bevorzugt um 200 µm oder weniger, ganz besonders bevorzugt 50 µm oder weniger, außerordentlich bevorzugt um 30 µm oder weniger, insbesondere um 10 µm oder weniger übersteigt oder der Dicke der Trägerbahn entspricht. Wie weiter oben beschrieben wurde, kann durch die Vorgabe der Höhe des Förderspalts die Dicke der Beschichtungsmaterials vorgegeben werden, an der die Haftelemente geformt werden. Für den Fall, dass die Höhe des Förderspalts der Dicke der Trägerbahn entspricht, werden die Haftelemente direkt an der Trägerbahn geformt, d.h. es wird bei der Herstellung des Haftverschlussteils keine durchgehende Beschichtungsbahn gebildet, welche die Haftelemente miteinander verbindet.

Bei einer alternativen Ausführungsform ist das Formsieb des Formwerkzeugs bandförmig ausgebildet und die Vorrichtung ist ausgebildet, zum Formen der Haftelemente in den Formhohlräumen die Trägerbahn mit der dem Beschichtungsmaterial zugewandten Seite mit dem bandförmigen Formsieb in Kontakt zu bringen, bevorzugt die Trägerbahn an dem bandförmigen, in der Regel metallischen Formsieb entlangzuführen. Wie weiter oben in Zusammenhang mit dem Verfahren beschrieben wurde, kann auf diese Weise ein besseres Anschmiegen des Beschichtungsmaterials und eine bessere Kapillarbefüllung erfolgen als dies bei der Verwendung einer Formwalze und einer Druckwalze zum Formen der Haftelemente der Fall ist.

Sowohl die Geschwindigkeit beim Formen der Haftelemente als auch die Breite des hergestellten Haftverschlussteils kann auf diese Weise deutlich gesteigert werden.

Die Vorrichtung kann eine Aushärtungseinrichtung zur Aushärtung des Beschichtungsmaterials nach dem Formen der Haftelemente aufweisen, wobei die Aushärtungseinrichtung bevorzugt zum Aushärten des Beschichtungsmaterials nach dem Entformen der Haftelemente von dem Formwerkzeug oder vor dem Entformen ausgebildet ist. Wie weiter oben in Zusammenhang mit dem Verfahren beschrieben wurde, kann die Aushärtung z.B. durch Wärme, durch Licht und/oder durch Luftfeuchte erfolgen. Die Aushärtungseinrichtung kann eines oder mehrere Heizelemente, eine oder mehrere Wärmestrahler, Lichtquellen und/oder eine Einrichtung zur Erhöhung der Luftfeuchte in der Umgebung des Haftverschlussteils aufweisen.

Ein weiterer Aspekt der Erfindung betrifft ein Haftverschlussteil der eingangs genannten Art, das insbesondere gemäß dem weiter oben beschriebenen Verfahren hergestellt ist, bei dem die Haftelemente an einer einteiligen Beschichtungsbahn geformt sind, die an einer Trägerbahn angebracht ist, oder bei dem die Haftelemente direkt an der Trägerbahn angebracht sind. Wie weiter oben beschrieben wurde, kann die Beschichtungsbahn des Haftverschlussteils, die an der Trägerbahn angebracht bzw. mit der Trägerbahn verbunden ist, eine geringere Dicke aufweisen dies bei einem Haftverschlussteil ohne eine Trägerbahn der Fall ist. Für den Fall, dass die Haftelemente direkt an der Trägerbahn angebracht sind, unterscheidet sich das Material der Haftelemente typischerweise vom Material der Trägerbahn.

Die Beschichtungsbahn kann z.B. eine Dicke von 2 mm oder weniger, bevorzugt von 300 µm oder weniger, besonders bevorzugt von 200 µm oder weniger, ganz besonders bevorzugt von 50 µm oder weniger, außerordentlich bevorzugt von 30 µm oder weniger, insbesondere von 10 µm oder weniger aufweisen. Insbesondere kann die Dicke der Beschichtungsbahn bei 0 µm liegen. In letzterem Fall sind die Haftelemente direkt an der Trägerbahn angebracht.

Die Trägerbahn kann eine Dicke von 10 mm oder weniger, bevorzugt von 60 µm oder weniger, besonders bevorzugt von 40 µm oder weniger, aufweisen. Auf diese Weise kann der Materialbedarf bei der Herstellung des Haftverschlussteils weiter reduziert werden.

Die Haftelemente können eine Höhe von mindestens 20 µm, von mindestens 30 µm, oder von mindestens 40 µm aufweisen. Eine Mindesthöhe der Haftelemente ist typischerweise erforderlich, um die Adhäsion bzw. die Anhaftung an glatten Oberflächen von weiteren Bauteilen zu ermöglichen. Die Haftelemente weisen in der Regel eine Höhe auf, die nicht größer ist als 800 µm, insbesondere nicht größer ist als 150 µm. Das Aspektverhältnis der Haftelemente, d.h. das Verhältnis der Höhe zur Breite der Haftelemente, liegt bevorzugt zwischen 0,1 und 3,0.

Wie weiter oben in Zusammenhang mit dem Verfahren beschrieben wurde, ist die Trägerbahn als flexibles Bauteil, bevorzugt als Folie, insbesondere als informationstragende Folie, oder als starres Bauteil ausgebildet. Die Trägerbahn in Form der Folie kann beispielsweise aus Polyurethan (PUR), aus Polyethylenterephtalat (PET) oder aus Acrylatschaum hergestellt sein. Die Trägerbahn in Form der Folie kann aber auch aus anderen Materialien hergestellt sein.

Wie weiter oben beschrieben wurde, kann das Material der Trägerbahn beispielsweise ausgewählt sein aus der Gruppe umfassend: Textil, Vlies, Schaum, insbesondere Acrylatschaum, Polyurethan, Thermoplaste.

Es ist möglich, dass an einer dem Beschichtungsmaterial abgewandten Seite der Trägerbahn ein Verbindungsmittel, insbesondere eine Klebstoffschicht, aufgebracht ist. Das Verbindungsmittel, beispielsweise in Form der Klebstoffschicht, kann zur dauerhaften Verbindung des Haftverschlussteils mit einem anderen Bauteil dienen. Die Klebstoffschicht kann nach dem Entformen von einem Formwerkzeug an der dem Beschichtungsmaterial abgewandten Seite der Trägerbahn aufgebracht werden, es ist aber auch möglich, dass die Klebstoffschicht bereits bei der Zuführung der Trägerbahn zu dem Formwerkzeug auf die dem Beschichtungsmaterial abgewandte Seite der Trägerbahn aufgebracht ist oder aufgebracht wird.

Es ist insbesondere auch möglich, dass die Trägerbahn selbst aus einem Klebstoff besteht oder einen Klebstoff enthält. In diesem Fall kann in einem Schritt ein fertiges Haftverschlussteil gebildet werden.

Bei einer weiteren Ausführungsform weisen die Haftelemente an der Trägerbahn, genauer gesagt an der Trägerfläche der Trägerbahn, eine Flächendichte von mindestens 10000 / cm² und von nicht mehr als 100000 / cm², bevorzugt von mindestens 25000 / cm² und von nicht mehr als 50000 / cm², auf. Für eine verlässliche wiederlösbare Anhaftung des Haftverschlussteils an einer glatten Oberfläche eines oder mehrerer weiterer Bauteile mittels Adhäsionskraft wird eine große Flächendichte der Haftelemente benötigt.

Die Flächendichte, d.h. die Anzahl der Haftelemente pro cm² der Trägerfläche, die für eine verlässliche wiederlösbare Anhaftung durch Adhäsionskraft erforderlich ist, ist deutlich größer als bei Verhakungsmitteln, die mit anderen Verhakungsmitteln, beispielsweise mit Flausch- oder Hookmaterial, zusammenwirken sollen, um eine wiederlösbare Anhaftung zu realisieren.

Die Haftelemente sind typischerweise pilzförmig ausgebildet und weisen einen Kopfbereich auf, an dem stirnseitig eine jeweilige Kontaktfläche gebildet ist. An den Kopfbereich schließt sich typischerweise ein Stiel an, der in ein Fußteil übergeht. Die Haftelemente können rotationssymmetrisch ausgebildet sein, dies ist aber nicht zwingend erforderlich. Der Kopfbereich der pilzförmigen Haftelemente steht seitlich über den Stiel über. Auch das Fußteil steht in der Regel seitlich über den Stiel über. Die Haftelemente sind typischerweise massiv ausgebildet, d.h. diese weisen keine Kavität auf.

Bei einer weiteren Ausführungsform ist an einer den Haftelementen gegenüberliegenden Seite der Trägerbahn eine Vielzahl von weiteren Haftelementen aus einem Beschichtungsmaterial mit stirnseitigen Kontaktflächen zur wiederlösbaren Anhaftung an weiteren Bauteilen mittels Adhäsionskraft angebracht, wobei die weiteren Haftelemente bevorzugt entweder an einer weiteren einteiligen Beschichtungsbahn geformt sind, die an der Trägerbahn angebracht ist, oder direkt an der Trägerbahn angebracht sind. Wie weiter oben in Zusammenhang mit dem Verfahren beschrieben wurde, können die weiteren Haftelemente an der den Haftelementen gegenüberliegenden Seite der Trägerbahn gebildet werden, indem die Trägerbahn die Vorrichtung zur Herstellung des Haftverschlussteils zweimal mit umgekehrter Ausrichtung der Seiten der Trägerbahn durchläuft. Die Trägerbahn kann in diesem Fall einstückig ausgebildet sein, dies ist aber nicht zwingend erforderlich.

Es ist aber auch möglich, das hier beschriebene Haftverschlussteil, das Haftelemente auf beiden Seiten der Trägerbahn aufweist, auf andere Weise herzustellen. Beispielsweise kann die Trägerbahn des hier beschriebenen Haftverschlussteils zwei Schichten aufweisen, die übereinander angeordnet sind, wobei an einer Schicht die Haftelemente und an der anderen Schicht die weiteren Haftelemente gebildet sind. Die beiden Schichten mit den zugehörigen Haftelementen können zunächst getrennt - z.B. auf die weiter oben beschriebene Weise - hergestellt und anschließend zusammengeführt und miteinander verbunden werden. Die Verbindung zwischen den beiden Schichten kann beispielswiese durch eine Kleberschicht hergestellt werden.

Zumindest einige Haftelemente können vorteilhaft gleich oder ähnlich zu den weiteren Haftelementen ausgebildet sein. Insbesondere können die Haftelemente und die weiteren Haftelemente gleich ausgebildet sein. Auf diese Weise kann die Herstellung des doppelseitig wirksamen Haftverschlussteils vereinfacht werden.

Die Haftelemente und die weiteren Haftelemente können dieselbe Flächendichte aufweisen. Es hat sich aber als günstig erwiesen, wenn die Haftelemente und die weiteren Haftelemente eine unterschiedliche Flächendichte aufweisen. Insbesondere können die Haftelemente an der Trägerfläche der Trägerbahn mit einer Flächendichte von 25000 Haftelementen / cm² bis 50000 Haftelementen / cm² angeordnet sein und die weiteren Haftelemente an der gegenüberliegenden Trägerfläche der Trägerbahn können mit einer Flächendichte von 15000 Haftelementen / cm² bis 20000 Haftelementen / cm² angeordnet sein.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1a: zeigt schematisch eine teils geschnitten gezeichnete Ansicht einer Vorrichtung zur Herstellung eines Haftverschlussteils gemäß dem Stand der Technik;
- Fig. 1b: zeigt schematisch ein Detail eines mittels der Vorrichtung von Fig. 1a hergestellten Haftverschlussteils;
- Fig. 2a: zeigt schematisch eine teils geschnitten gezeichnete Ansicht einer erfindungsgemäßen Vorrichtung zur Herstellung eines erfindungsgemäßen Haftverschlussteils;
- Fig. 2b: zeigt schematisch ein Detail eines mittels der Vorrichtung von Fig. 2a oder von Fig. 4 hergestellten Haftverschlussteils;
- Fig. 2c: zeigt schematisch ein Detail eines weiteren mittels der Vorrichtung von Fig. 2a oder von Fig. 4 hergestellten Haftverschlussteils;
- Fig. 3: zeigt schematisch ein Detail eines weiteren mittels der Vorrichtung von Fig. 2a oder von Fig. 4 hergestellten Haftverschlussteils;
- Fig. 4: zeigt schematisch eine teils geschnitten gezeichnete Ansicht einer weiteren erfindungsgemäßen Vorrichtung zur Herstellung eines erfindungsgemäßen Haftverschlussteils.

In der folgenden Beschreibung der Zeichnungen werden für gleiche bzw. funktionsgleiche Bauteile identische Bezugszeichen verwendet.

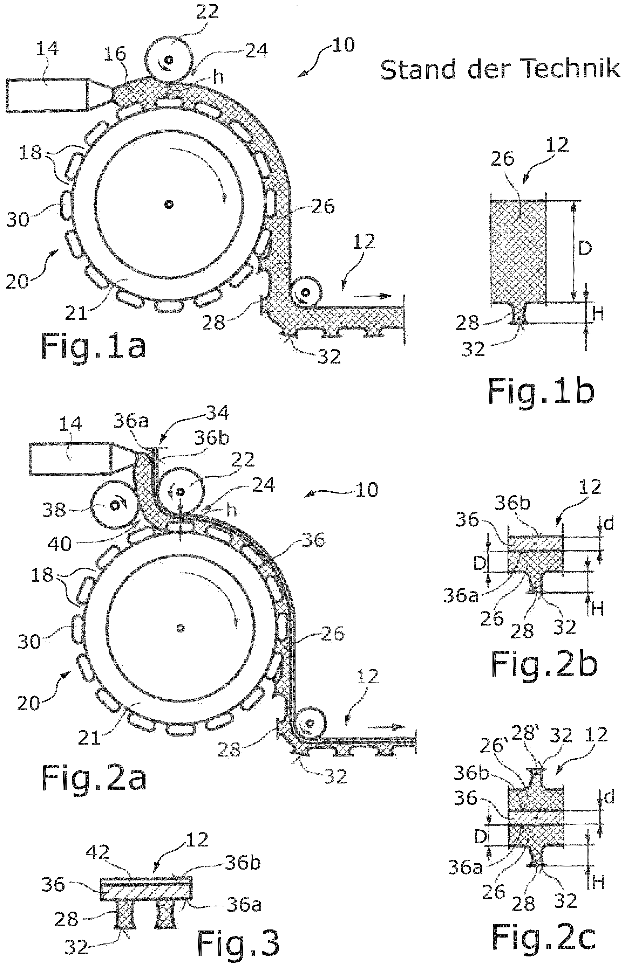

**Fig. 1a** zeigt schematisch eine Vorrichtung **10** zur Herstellung eines Haftverschlussteils **12,** mit der ein Verfahren zur Herstellung des Haftverschlussteils 12 durchgeführt wird. Die Vorrichtung 10 weist eine Zuführungseinrichtung **14** in Form eines Extruderkopfs auf, der zur Zuführung eines im flüssigen oder plastischen Zustand vorliegenden Beschichtungsmaterials **16** zu Formhohlräumen **18** eines Formwerkzeugs **20** dient. Das Formwerkzeug 20 weist eine Formwalze **21** auf, die zur Herstellung des Haftverschlussteils 12 mit einem Druckwerkzeug in Form einer Druckwalze **22** zusammenwirkt.

Die Druckwalze 22 und die Formwalze 21 sind jeweils in durch Bogenpfeile angedeuteten Drehrichtungen angetrieben. Zwischen der Druckwalze 22 und der Formwalze 21 ist ein Förderspalt **24** gebildet, durch den das bandförmige Beschichtungsmaterial 16 in einer Transportrichtung gefördert wird, die in Fig. 1a durch einen horizontalen Pfeil angedeutet ist. Der Förderspalt 24 dient auch als Formgebungszone und formt das Beschichtungsmaterial 16 zu einer Beschichtungsbahn **26,** wobei gleichzeitig die der Formwalze zugewandte Seite des Beschichtungsmaterials 16 in die Formhohlräume 18 gedrückt wird und in den Formhohlräumen 18 Haftelemente **28** aus dem Beschichtungsmaterial 16 gebildet werden. Die Formhohlräume 18 sind an einer Formgebungsschicht in Form eines metallischen Formsiebs **30** angebracht bzw. in diesem gebildet. Die Formhohlräume 18 sind am Außenumfang der Formwalze 21 regelmäßig verteilt angeordnet, wobei die Anzahl und die Verteilung der Formhohlräume 18 des metallischen Formsiebs 30 grundsätzlich frei wählbar ist.

Nach dem Entformen der Haftelemente 28 von dem Formwerkzeug 20 wird das bandförmige Haftverschlussteil 12 gebildet, von dem in **Fig. 1b** ein kleiner Abschnitt mit einem Haftelement 28 dargestellt ist. Das Haftelement 28 weist eine stirnseitige Kontaktfläche **32** auf, die zur wiederlösbaren Anhaftung an weiteren Bauteilen mittels Adhäsionskraft dient. Die Kontaktfläche 32 ist sehr klein und weist im gezeigten Beispiel eine Fläche von ca. 2000 µm² auf. Die Höhe H eines jeweiligen Haftelements 28 liegt im gezeigten Beispiel bei ca. 50 µm, kann aber auch kleiner oder größer sein. Die Höhe H kann beispielsweise in einem Wertebereich zwischen ca. 20 µm und ca. 100 µm liegen. Die Haftelemente 28 sind im gezeigten Beispiel pilzförmig ausgebildet und weisen einen Kopfbereich auf, an dem stirnseitig die Kontaktfläche 32 gebildet ist. An den Kopfbereich schließt sich ein Stiel an, der in ein Fußteil übergeht. Der Kopfbereich der Haftelemente 28 steht seitlich über den Stiel der Haftelemente 28 über.

Wie in Fig. 1b zu erkennen ist, weist die Beschichtungsbahn 26, die in der Formgebungszone in dem Förderspalt 24 zwischen der Druckwalze 22 und der Formwalze 21 gebildet wird, eine verhältnismäßig große Dicke D in der Größenordnung von ca. 300 µm auf, um ein Reißen der Beschichtungsbahn 26 bei der Herstellung des Haftverschlussteils 12 in der Vorrichtung 10 zu vermeiden. Das auf diese Weise hergestellte Haftverschlussteil 12 ist aufgrund der großen Dicke D der Beschichtungsbahn 26 recht steif und dessen Herstellung ist materialintensiv.

**Fig. 2a** zeigt eine Vorrichtung 10 zur Herstellung eines bandförmigen Haftverschlussteils 12, die sich von der in Fig. 1a gezeigten Vorrichtung 10 dadurch unterscheidet, dass sie eine weitere Zuführungseinrichtung **34** aufweist, die zur Zuführung einer Trägerbahn **36** zu dem Formwerkzeug 20 ausgebildet ist. Die weitere Zuführungseinrichtung 34 ist in Fig. 2a in Form einer nicht bildlich dargestellten Abrolleinrichtung ausgebildet, von der die Trägerbahn 36 abgewickelt wird. Die Trägerbahn 36 wird dem Formwerkzeug 20, das die Formwalze 21 aufweist, gemeinsam mit dem bandförmigen Beschichtungsmaterial 16 zugeführt, wobei eine erste, dem Beschichtungsmaterial 16 zugewandte Seite **36a** der Trägerbahn 36 an dem Beschichtungsmaterial 16 anliegt und sich mit dem Beschichtungsmaterial 16 verbindet, bevor die Haftelemente 28 in den Formhohlräumen 18 geformt werden.

Die Vorrichtung 10 bzw. die weitere Zuführungseinrichtung 34 ist ausgebildet, die Trägerbahn 36 gemeinsam mit dem Beschichtungsmaterial 16 durch den Förderspalt 24 zu führen. Hierbei wird die Trägerbahn 36 an einer der Formwalze 21 abgewandten Seite des Beschichtungsmaterials 16 geführt. Für die gemeinsame Führung des bandförmigen Beschichtungsmaterials 16 und der Trägerbahn 36 weist die Vorrichtung 10 eine weitere Druckwalze **38** auf, die mit der Druckwalze 22 zusammenwirkt, um die Trägerbahn 36 und das Beschichtungsmaterial 16 gemeinsam durch einen Zuführungsspalt **40** zwischen der Druckwalze 22 und der weiteren Druckwalze 38 zu führen. Durch den Zuführungsspalt 40 wird das Beschichtungsmaterial 16 gegen die Trägerbahn 36 angedrückt, was die Ausbildung einer dauerhaften Verbindung zwischen der Trägerbahn 36 und dem Beschichtungsmaterial 16 begünstigt. Es versteht sich, dass die Zuführung der Trägerbahn 36 zu dem Formwerkzeug 20 auch auf andere als die hier beschriebene Weise möglich ist, z.B. auf die weiter unten beschriebene Weise.

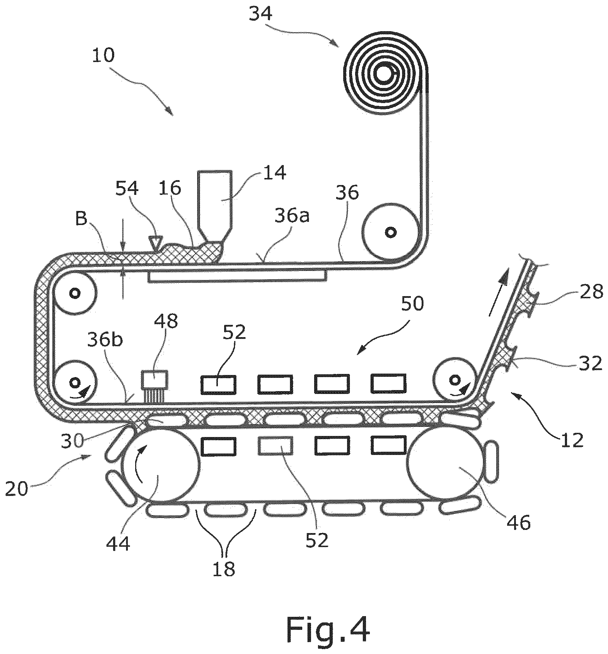

Durch die Anbringung der Beschichtungsbahn 26 an der Trägerbahn 36 bzw. durch die Verbindung der Beschichtungsbahn 26 mit der Trägerbahn 36 kann die Beschichtungsbahn 26 des Haftverschlussteils 12 deutlich dünner ausgebildet werden, wie sich durch einen Vergleich von **Fig. 2b****,** welche das mit der Vorrichtung 10 von Fig. 2a oder mit der weiter unten in Zusammenhang mit Fig. 4 beschriebenen Vorrichtung 10 hergestellte Haftverschlussteil 12 zeigt, mit dem in Fig. 1b gezeigten Haftverschlussteil 12 ergibt: Die Dicke D der Beschichtungsbahn 26 liegt bei dem in Fig. 2b gezeigten Haftverschlussteil 12 bei ca. 50 µm oder weniger, z.B. bei 30 µm oder weniger oder bei ca. 10 µm oder weniger, kann aber auch größer sein und bei 2 mm oder weniger, bei 300 µm oder weniger, bei 200 µm oder weniger oder bei 100 µm oder weniger liegen. Die Dicke d der Trägerbahn 36 ist ebenfalls vergleichsweise gering und liegt bei ca. 60 µm oder weniger, z.B. bei 40 µm oder weniger. Die Dicke d der Trägerbahn 36 sollte eine Mindestdicke nicht unterschreiten, die abhängig vom Material der Trägerbahn 36 ist und in der Regel in der Größenordnung von ca. 25 µm liegt.

**Fig. 2c** zeigt ein Haftverschlussteil 12, das an einer zweiten Seite 36b der Trägerbahn 36 eine weitere Beschichtungsbahn 26' mit weiteren Haftelementen 28' aufweist. Die weitere Beschichtungsbahn 26' und die weiteren Haftelemente 28' sind auf die gleiche Weise wie die Beschichtungsbahn 26 und die Haftelemente 26 an der ersten Seite 36a der Trägerbahn 36 ausgebildet. Das in Fig. 2c gezeigte Haftverschlussteil wird erhalten, indem die Trägerbahn 36 die in Fig. 2a oder die in Fig. 4 gezeigte Vorrichtung 10 zweimal durchläuft, wobei die beiden Seiten 36a, 36b der Trägerbahn 36 beim den beiden Durchläufen durch die Vorrichtung 10 entgegengesetzt ausgerichtet sind. Das in Fig. 2c gezeigte doppelseitig wirksame Haftverschlussteil 12 kann auch eine Trägerbahn 26 mit zwei übereinanderliegenden Schichten aufweisen, welche die Haftelemente 28 bzw. die weiteren Haftelemente 28' aufweisen. Die beiden Schichten einer solchen Trägerbahn 26 können beispielsweise durch eine Klebstoffschicht miteinander verbunden werden.

Sowohl bei der in Fig. 1a als auch bei der in Fig. 2a gezeigten Vorrichtung 10 wird das Beschichtungsmaterial 16 typischerweise nach dem Formen der Haftelemente 28 durch Wärme, die beispielsweise vom Formgebungswerkzeug 20 erzeugt wird, durch Licht, beispielsweise durch UV-Licht, und/oder durch Luftfeuchte ausgehärtet. Beim Aushärten erfolgt eine Vernetzung der Moleküle bzw. der Molekülketten des Beschichtungsmaterials 16. Im gezeigten Beispiel handelt es sich bei dem Beschichtungsmaterial 16 um Polysiloxan, es kann sich aber auch um ein anderes Elastomer, beispielsweise um Polyurethan handeln. Das Beschichtungsmaterial 16 kann für das Aushärten geeignet präpariert sein, beispielsweise kann es sich um 2-Komponenten Silikonkautschuk handeln. In diesem Fall kann vor dem Extrudieren eine flüssige Silikonkomponente mit eine Katalysator, z.B. einem Platin-Katalysator, vermischt werden, um ein Beschichtungsmaterial 16 in Form einer gummiartige Masse zu erzeugen, welche nach dem Formen der Haftelemente 28 vulkanisiert bzw. aushärtet. Auch thermoplastische Elastomere oder Thermoplaste können als Beschichtungsmaterial 16 verwendet werden.

Im gezeigten Beispiel ist die Trägerbahn 36 als Folie ausgebildet, d.h. die Trägerbahn 36 bildet eine Trägerfolie. Die Trägerfolie kann informationstragend sein, dies ist aber nicht zwingend erforderlich. An Stelle einer durchgehenden Folie kann die Trägerbahn 36 auch als starres Bauteil ausgebildet sein. Bei dem Material der Trägerbahn 36 kann es sich um ein Textil, ein Vlies, ein Netz, einen Schaum, beispielsweise um Acrylatschaum, um Polyurethan, Elastomere, thermoplastische Elastomere, Duroplaste oder Klebstoffe handeln. Es ist auch möglich, dass die Trägerbahn 36 aus einem thermoplastischen Material hergestellt ist, z.B. aus Polyethylenterephtalat (PET). In diesem Fall kann die Trägerbahn 36 z.B. durch ein Tiefziehverfahren thermogeformt werden, was es ermöglicht, dass die Haftelemente 28 sich in verschiedene Richtungen erstrecken und in verschiedenen Richtungen haften können.

Zur Verbesserung der (dauerhaften) Verbindung der Trägerbahn 36 mit dem Beschichtungsmaterial 16 kann die Trägerbahn 36 an ihrer dem Beschichtungsmaterial 16 zugewandten ersten Seite 36a mit einem Haftvermittler, z.B. mit einer Haftvermittlerschicht, versehen werden oder die erste Seite 36a der Trägerbahn 36 kann einer Oberflächenbehandlung unterzogen werden. Es ist grundsätzlich auch möglich, die Trägerbahn 36 lösbar, insbesondere peelfähig lösbar, mit dem Beschichtungsmaterial 16 zu verbinden, sodass die Trägerbahn 36 nach dem Entformen der Haftelemente 28 von den Formhohlräumen 18 des Formwerkzeugs 20 von der Trägerbahn 36 separiert bzw. abgezogen werden kann. Die Trägerbahn 36 dient in diesem Fall lediglich dazu, um ein Reißen des Beschichtungsmaterials 16 bei der Herstellung des Haftverschlussteils 12 zu verhindern, sodass die Beschichtungsbahn 26 mit einer geringeren Dicke D erzeugt werden kann als dies in Zusammenhang mit Fig. 1a,b beschrieben ist.

Die Dicke D der Beschichtungsbahn 26 wird im Wesentlichen durch die Höhe h des Förderspalts 24 zwischen der Druckwalze 22 und der Formwalze 20 bestimmt. Um die Beschichtungsbahn 26 mit der oben angegebenen Dicke D zu bilden, sollte die Höhe h des Förderspalts 24 die Dicke d der Trägerbahn 36 um 2 mm oder weniger, um 300 µm oder weniger, um 200 µm oder weniger, um 100 µm oder weniger, um 50 µm oder weniger, um 30 µm oder weniger bzw. um 10 µm oder weniger übersteigen.

Es ist auch möglich, dass die Höhe h des Förderspalts 24 im Wesentlichen der Dicke d der Trägerbahn 36 entspricht. In diesem Fall werden die Halteelemente 28 direkt und einzeln an der Trägerbahn 36 geformt, wie dies in **Fig. 3** dargestellt ist. An einer dem Beschichtungsmaterial 16 der Haftelemente 28 abgewandten zweiten Seite **36b** kann auf die Trägerbahn 36 ein Verbindungsmittel, beispielsweise in Form einer Klebstoffschicht **42,** aufgebracht werden, wie dies ebenfalls in Fig. 3 dargestellt ist. Die Klebstoffschicht 42 ermöglicht eine dauerhafte Verbindung des Haftverschlussteils 12 mit einem weiteren Bauteil, das in Fig. 3 nicht bildlich dargestellt ist.

An den Kontaktflächen 32 haften die Haftelemente 28 der in Fig. 2b und in Fig. 3 dargestellten Haftverschlussteile 12 an einem ebenfalls nicht bildlich dargestellten weiteren Bauteil, das eine glatte Oberfläche aufweist, wiederlöslich mittels Adhäsionskraft. Um eine verlässliche wiederlösbare Anhaftung des Haftverschlussteils 12 an der glatten Oberfläche eines anderen Bauteils zu ermöglichen, weisen die Haftelemente 28 von Fig. 2b und Fig. 3 eine Flächendichte von mindestens 10000 / cm² und von nicht mehr als 100000 / cm², typischerweise von mindestens 25000 / cm² und von nicht mehr als 50000 / cm², an der Trägerbahn 36 auf. Die Haftelemente 28 des Haftverschlussteils 12 von Fig. 2c weisen eine Flächendichte von mindestens 25000 / cm² und von nicht mehr als 50000 / cm² auf, die weiteren Haftelemente 28' des Haftverschlussteils 12 von Fig. 2c weisen eine Flächendichte von mindestens 15000 / cm² und von nicht mehr als 20000 / cm² auf.

Es versteht sich, dass die Herstellung des Haftverschlussteils 12 auch auf andere als die weiter oben beschriebene Weise erfolgen kann. Beispielsweise kann an Stelle eines Formwerkzeugs 20, das eine Formwalze 21 aufweist, ein Formwerkzeug verwendet werden, das zwei oder mehr Formwalzen aufweist.

**Fig. 4** zeigt eine Vorrichtung 10 zur Herstellung des Haftverschlussteils 12, die sich von der in Fig. 2a gezeigten Vorrichtung 10 unter anderem dadurch unterscheidet, dass das metallische Formsieb 30 bandförmig ausgebildet ist und um eine erste Rolle **44** und eine zweite Rolle **46** umläuft. Der Abstand zwischen den beiden Rollen 44, 46 ist so gewählt, dass das Formsieb 30 gespannt ist, sodass sich zwischen den beiden Rollen 44, 46 ein geradliniger Abschnitt des Formsiebs 30 bildet, der dem Beschichtungsmaterial 16 zugewandt ist. Die Trägerbahn 36 wird mit ihrer dem Beschichtungsmaterial 16 zugewandten Seite 36a im Bereich der ersten Rolle 44 mit dem bandförmigen Formsieb 30 in Kontakt gebracht, genauer gesagt auf das bandförmige Formsieb 30 aufgelegt. Hierbei fließt das Beschichtungsmaterial 16 durch Kapillarkräfte in die Formhohlräume 18 des bandförmigen Formsiebs 30, wodurch die Haftelemente 28 in den Formhohlräumen 18 geformt werden. Die Trägerbahn 36 wird dem Formsieb 30 hierbei parallel zu dem geradlinigen Abschnitt zugeführt, der die Oberseite des Formwerkzeugs 20 bildet.

Eine Bürste **48** drückt auf die dem Beschichtungsmaterial 16 abgewandte Seite 36b der Trägerbahn 36, um diese zu glätten bzw. deren Welligkeit auszugleichen.

Die Trägerbahn 36 und somit das Beschichtungsmaterial 16 wird an dem geradlinigen Abschnitt des bandförmigen Formsiebs 30 entlanggeführt und das Beschichtungsmaterial 16 wird im Bereich der zweiten Rolle 46 von dem Formsieb 30 entformt, wobei sich das bandförmige Haftverschlussteil 12 bildet. Nach dem Formen der Haftelemente 28 durch das Eindringen des Beschichtungsmaterials in die Formhohlräume 18 des Formsiebs 30 wird das Beschichtungsmaterial 16 beim Entlangführen an der Trägerbahn 36 durch eine Aushärtungseinrichtung **50** ausgehärtet, die eine Mehrzahl von Wärmestrahlern **52** aufweist, die im Bereich des geradlinigen Abschnitts des Formsiebs 30 auf beiden Seiten 36a, 36b der Trägerbahn 36 angeordnet sind. Die Wärmestrahler 52 bringen IR-Strahlung in das Beschichtungsmaterial 16 ein, um dieses auszuhärten.

Bei der in Fig. 4 gezeigten Vorrichtung 10 wird wie in Fig. 2a das Beschichtungsmaterial 16 mittels einer Zuführungseinrichtung in Form eines Extruderkopfs 14 dem Formwerkzeug 20 zugeführt. Die Trägerbahn 36 wird hierbei mit dem Beschichtungsmaterial 16 beschichtet, wobei eine Beschichtungshöhe **B** durch ein Rakel **54** festgelegt wird, das zur Glättung des Beschichtungsmaterials 16 dient. Typischerweise liegt die Beschichtungshöhe B des Beschichtungsmaterials 16 in der Größenordnung zwischen ca. 50 µm und 150 µm. Es ist möglich, dass das Beschichtungsmaterial 16 beim Beschichten strukturiert wird oder dass eine Strukturierung des Beschichtungsmaterials 16 nach dem Beschichten erfolgt, bevor das Beschichtungsmaterial 16 dem Formwerkzeug 20 zugeführt wird.

### Bezuaszeichenliste

- 10: Vorrichtung
- 12: Haftverschlussteil
- 14: Zuführungseinrichtung
- 16: Beschichtungsmaterial
- 18: Formhohlraum
- 20: Formwerkzeug
- 21: Formwalze
- 22: Druckwalze
- 24: Förderspalt
- 26: Beschichtungsbahn
- 26': weitere Beschichtungsbahn
- 28: Haftelement
- 28': weiteres Haftelement
- 30: Formsieb
- 32: Kontaktfläche
- 34: weitere Zuführungseinrichtung
- 36: Trägerbahn
- 36a: erste Seite der Trägerbahn
- 36b: zweite Seite der Trägerbahn
- 38: weitere Druckwalze
- 40: Zuführungsspalt
- 42: Klebstoffschicht
- 44: erste Rolle
- 46: zweite Rolle
- 48: Bürste
- 50: Aushärtungseinrichtung
- 52: Wärmestrahler
- 54: Rakel

## Patentansprüche

1. Verfahren zum Herstellen eines Haftverschlussteils (12), das eine Vielzahl von Haftelementen (28) mit stirnseitigen Kontaktflächen (32) zur wiederlösbaren Anhaftung an weiteren Bauteilen mittels Adhäsionskraft aufweist, wobei die Haftelemente (28) in Formhohlräumen (18) eines Formsiebs (30) eines Formwerkzeugs (20) aus einem Beschichtungsmaterial (16) geformt werden,
**dadurch gekennzeichnet,**
**dass** dem Beschichtungsmaterial (16) eine Trägerbahn (36) zugeführt wird und an einer dem Beschichtungsmaterial (16) zugewandten Seite (36a) der Trägerbahn (36) in den Formhohlräumen (18) des Formwerkzeugs (20) die Haftelemente (28) geformt werden, wobei die Trägerbahn (36) bevorzugt vor dem Formen der Haftelemente (28) mit dem Beschichtungsmaterial (16) verbunden wird.

2. Verfahren nach Anspruch 1, bei dem beim Formen der Haftelemente (28) zwischen der Trägerbahn (36) und den Haftelementen (28) aus dem Beschichtungsmaterial (16) eine Beschichtungsbahn (26) gebildet wird, die eine Dicke (D) von 2 mm oder weniger, bevorzugt von 300 µm oder weniger, besonders bevorzugt von 200 µm oder weniger, ganz besonders bevorzugt von 50 µm oder weniger, außerordentlich bevorzugt von 30 µm oder weniger, insbesondere von 10 µm oder weniger aufweist.

3. Verfahren nach Anspruch 2, bei dem nach dem Entformen der Haftelemente (28) von den Formhohlräumen (18) des Formwerkzeugs (20) die Trägerbahn (36) von der Beschichtungsbahn (26) separiert wird.

4. Verfahren nach Anspruch 1, bei dem die Haftelemente (28) direkt an der dem Beschichtungsmaterial (16) zugewandten Seite (36a) der Trägerbahn (36) geformt werden.

5. Verfahren nach einem der vorhergehenden Ansprüche, bei dem das Beschichtungsmaterial (16) nach dem Formen der Haftelemente (28) durch Wärme, durch Licht, bevorzugt durch UV-Licht, und/oder durch Luftfeuchte ausgehärtet wird.

6. Verfahren nach einem der vorhergehenden Ansprüche, bei dem die Trägerbahn (36) eine Dicke (d) von 10 mm oder weniger, bevorzugt von 60 µm oder weniger, besonders bevorzugt von 40 µm oder weniger aufweist.

7. Verfahren nach einem der vorhergehenden Ansprüche, bei dem die Trägerbahn (36) als flexibles Bauteil, bevorzugt als Folie, insbesondere als informationstragende Folie, oder als starres Bauteil ausgebildet ist.

8. Verfahren nach einem der vorhergehenden Ansprüche, bei dem die Trägerbahn (36) ausgewählt ist aus der Gruppe umfassend: Textil, Vlies, Netz, Schaum, insbesondere Acrylatschaum.

9. Verfahren nach einem der vorhergehenden Ansprüche, bei welchem dem Beschichtungsmaterial (16) eine Trägerbahn (36) zugeführt wird, die an einer dem Beschichtungsmaterial (16) abgewandten Seite (36b) eine Vielzahl von weiteren Haftelementen (28') aus einem Beschichtungsmaterial (16) mit stirnseitigen Kontaktflächen (32) zur wiederlösbaren Anhaftung an weiteren Bauteilen mittels Adhäsionskraft aufweist.

10. Verfahren nach einem der vorhergehenden Ansprüche, bei dem das Material der Trägerbahn ausgewählt ist aus der Gruppe umfassend: Polyurethan, Elastomere, thermoplastische Elastomere, Thermoplaste, Duroplaste, Klebstoffe.

11. Verfahren nach einem der vorhergehenden Ansprüche, bei dem das Beschichtungsmaterial (16) ausgewählt ist aus der Gruppe umfassend: Elastomere, bevorzugt Polyurethane, Polysiloxane, insbesondere Polyvinylsiloxane, thermoplastische Elastomere, Thermoplaste.

12. Verfahren nach einem der vorhergehenden Ansprüche, bei dem das Beschichtungsmaterial (16) durch Beschichten mit der Trägerbahn (36) verbunden wird, wobei das Beschichtungsmaterial (16) bevorzugt beim Beschichten und/oder nach dem Beschichten strukturiert wird.

13. Verfahren nach einem der vorhergehenden Ansprüche, bei dem das Formsieb (30) des Formwerkzeugs (20) bandförmig ist und bei dem zum Formen der Haftelemente (28) die Trägerbahn (36) mit der dem Beschichtungsmaterial (16) zugewandten Seite (36a) mit dem bandförmigen Formsieb (30) in Kontakt gebracht, bevorzugt an dem bandförmigen Formsieb (30) entlanggeführt wird.

14. Vorrichtung (10) zur Herstellung eines Haftverschlussteils (12), insbesondere zur Durchführung des Verfahrens nach einem der vorhergehenden Ansprüche, umfassend:
ein Formwerkzeug (20) mit einem Formsieb (30), in dem Formhohlräume (18) gebildet sind,
eine Zuführungseinrichtung (14) zur Zuführung eines Beschichtungsmaterials (16) zu den Formhohlräumen (18) des Formwerkzeugs (20), die zur Formung einer Vielzahl von Haftelementen (28) mit stirnseitigen Kontaktflächen (32) zur wiederlösbaren Anhaftung an weiteren Bauteilen mittels Adhäsionskraft ausgebildet sind,
**gekennzeichnet durch**
eine weitere Zuführungseinrichtung (34) zur Zuführung einer Trägerbahn (36) zu dem Beschichtungsmaterial (16), wobei die Vorrichtung ausgebildet ist, an einer dem Beschichtungsmaterial (16) zugewandten Seite (36a) der Trägerbahn (36) in den Formhohlräumen (18) des Formwerkzeugs die Haftelemente (28) zu formen, und wobei die Vorrichtung bevorzugt ausgebildet ist, die Trägerbahn (36) vor dem Formen der Haftelemente (28) mit dem Beschichtungsmaterial (16) zu verbinden.

15. Vorrichtung nach Anspruch 14, bei der das Formwerkzeug (20) eine Formwalze (21) aufweist, die mit einem Druckwerkzeug in Form einer Druckwalze (22) zusammenwirkt, wobei zwischen der Druckwalze (22) und der Formwalze (20) ein Förderspalt (24) gebildet ist, und wobei die Vorrichtung (10) ausgebildet ist, die Trägerbahn (36) durch den Förderspalt (24) zu führen.

16. Vorrichtung nach Anspruch 15, bei welcher der Förderspalt (24) eine Höhe (h) aufweist, welche die Dicke (d) der Trägerbahn (36) um 2 mm oder weniger, bevorzugt um 300 µm oder weniger, besonders bevorzugt um 200 µm oder weniger, ganz besonders bevorzugt um 50 µm oder weniger, außerordentlich bevorzugt um 30 µm oder weniger, insbesondere um 10 µm oder weniger übersteigt oder der Dicke der Trägerbahn (36) entspricht.

17. Vorrichtung nach Anspruch 14, bei der das Formsieb (30) des Formwerkzeugs (20) bandförmig ausgebildet ist und die Vorrichtung ausgebildet ist, zum Formen der Haftelemente (28) in den Formhohlräumen (18) die Trägerbahn (36) mit der dem Beschichtungsmaterial (16) zugewandten Seite (36a) mit dem bandförmigen Formsieb (30) in Kontakt zu bringen, bevorzugt die Trägerbahn (36) an dem bandförmigen Formsieb (30) entlangzuführen.

18. Haftverschlussteil (12), insbesondere hergestellt nach dem Verfahren gemäß einem der Ansprüche 1 bis 13, umfassend eine Vielzahl von Haftelementen (28) aus einem Beschichtungsmaterial (16) mit stirnseitigen Kontaktflächen (32) zur wiederlösbaren Anhaftung an weiteren Bauteilen mittels Adhäsionskraft,
**dadurch gekennzeichnet,**
**dass** die Haftelemente (28) an einer einteiligen Beschichtungsbahn (26) geformt sind, die an einer Trägerbahn (36) angebracht ist, oder dass die Haftelemente (28) direkt an der Trägerbahn (36) angebracht sind.

19. Haftverschlussteil nach Anspruch 18, bei dem die Trägerbahn (36) als flexibles Bauteil, bevorzugt als Folie, insbesondere als informationstragende Folie, oder als starres Bauteil ausgebildet ist.

20. Haftverschlussteil nach einem der Ansprüche 18 oder 19, bei dem die Haftelemente (28) an der Trägerbahn (36) eine Flächendichte von mindestens 10000 / cm² und von nicht mehr als 100000 / cm², bevorzugt von mindestens 25000 / cm² und von nicht mehr als 50000 / cm², aufweisen.

21. Haftverschlussteil nach einem der Ansprüche 18 bis 20, bei dem an einer den Haftelementen (28) gegenüberliegenden Seite (36b) der Trägerbahn (36) eine Vielzahl von weiteren Haftelementen (28') aus einem Beschichtungsmaterial (16) mit stirnseitigen Kontaktflächen (32) zur wiederlösbaren Anhaftung an weiteren Bauteilen mittels Adhäsionskraft angebracht ist, wobei die weiteren Haftelemente (28') bevorzugt entweder an einer weiteren einteiligen Beschichtungsbahn (26') geformt sind, die an der Trägerbahn (36) angebracht ist, oder direkt an der Trägerbahn (36) angebracht sind.
